# EUROPEAN PATENT SPECIFICATION

(11) **EP 3 557 930 B1**
(45) Date of publication and mention of the grant of the patent: **24.09.2025**
(21) Application number: 18761738.6
(22) Date of filing: 16.01.2018
(51) Int. Cl.: H04W 72/23, H04B 7/26, H04L 5/00, H04W 72/1273, H04W 88/04

(54) **METHOD AND DEVICE FOR IMPLEMENTING COORDINATION OF USER APPARATUSES**
VERFAHREN UND VORRICHTUNG ZUR KOORDINATION VON BENUTZERGERÄTEN
PROCÉDÉ ET DISPOSITIF DE MISE EN UVRE DE COORDINATION D'APPAREILS UTILISATEURS

(30) Priority: 28.02.2017 CN 201710114330
(43) Date of publication of application: 23.10.2019
(73) Proprietor: Huawei Technologies Co., Ltd., Longgang District Shenzhen, Guangdong 518129 (CN)
(72) Inventor: SU, Hongjia, Shenzhen Guangdong 518129 (CN); PANG, Jiyong, Shenzhen Guangdong 518129 (CN); XIANG, Zhengzheng, Shenzhen Guangdong 518129 (CN)
(74) Representative: Pfenning, Meinig & Partner mbB
(86) International application number: PCT/CN2018/072772
(87) International publication number: WO 2018/157673

(56) References cited:
- WO-A1-2016/076301
- CN-A- 102 684 845
- CN-A- 102 932 044
- CN-A- 105 992 279
- US-A1- 2017 005 850
- US-A1- 2021 243 841
- NOKIA ET AL: "Native sidelink support in flexible frame structure for NR", vol. RAN WG1, no. Gothenburg, Sweden; 20160822 - 20160826, 21 August 2016 (2016-08-21), XP051140610, Retrieved from the Internet <URL:http://www.3gpp.org/ftp/Meetings_3GPP_SYNC/RAN1/Docs/> [retrieved on 20160821]

## Description

### TECHNICAL FIELD

This application relates to the field of communication technologies, and in particular, to a method for implementing user equipment cooperation and an apparatus.

### BACKGROUND

In a wireless communications network, some users have relatively low network quality of service and relatively poor user experience, because the users are located at an edge of a network coverage area, or interference of a surrounding environment to a network service is relatively high, or the like. A user equipment cooperation mechanism is introduced. To be specific, when some users are located in a central area of the network coverage area or have a relatively good surrounding network environment, if these users can help the users having poor network quality of service perform cooperative communication, different users may exchange some information with each other by using a sidelink (English: Sidelink, SL for short) communication technology, to greatly improve network quality of the users that have poor network quality of service before. For an entire system, network quality of service can be improved as a whole, to further obtain larger system throughput.

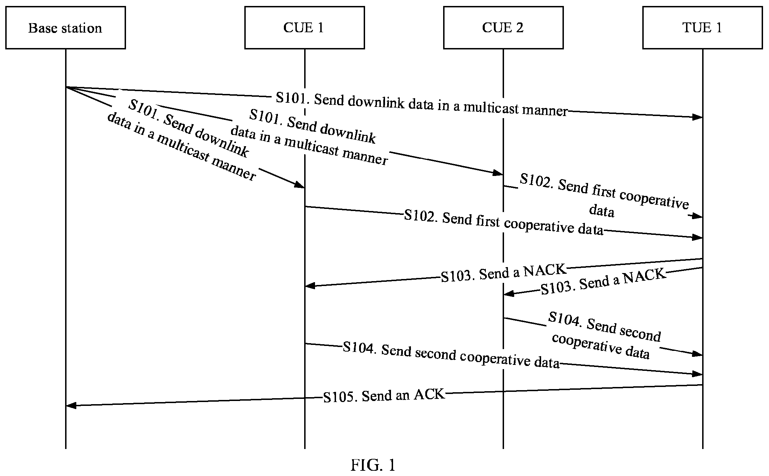

FIG. 1 is a schematic flowchart of user equipment cooperation. A procedure mainly includes the following steps. Step 1: A 5th generation (English: 5th-Generation, 5G for short) base station (English: gNodeB, gNB for short) sends downlink data to a user equipment cooperation group (English: User Equipment Cooperation Group, UECG for short) in a multicast manner (where group members include: cooperating user equipment (English: Cooperating User Equipment, CUE for short) 1, CUE 2, and target user equipment (English: Target User Equipment, TUE for short) 1). The members in the cooperation group receive the downlink data. The CUE 1 and/or the CUE 2 correctly decode/decodes the downlink data, but the TUE 1 fails to correctly decode the downlink data. Step 2: The CUE 1 and/or the CUE 2 send/sends first cooperative data to the TUE 1, where content of the first cooperative data is the same as that of the downlink data. Step 3: The TUE 1 fails to correctly decode the first cooperative data, and the TUE 1 feeds back a negative acknowledgement (English: Negative-Acknowledgement, NACK for short) to the CUE 1 and the CUE 2. Step 4: The CUE 1 and the CUE 2 receive the NACK feedback from the TUE 1, and send second cooperative data, where content of the second cooperative data is the same as that of the first cooperative data, and the second cooperative data is a retransmission version of the first cooperative data. Step 5: The TUE 1 correctly decodes the second cooperative data, and feeds back an acknowledgement (English: Acknowledgement, ACK for short) to the gNB. Although a concept of user equipment cooperation has been provided, a specific implementation in which the gNB controls a plurality of user equipments to perform user equipment cooperation is not provided currently. Therefore, how the gNB controls the plurality of user equipments to perform the user equipment cooperation is a currently discussed technical problem.
NOKIA ET AL, "Native sidelink support in flexible frame structure for NR", vol. RAN WG1, 3GPP DRAFT; R1-167268, XP051140610 discusses native support for sidelink operation using flexible frame structures.

### SUMMARY

The scope of the invention is defined by the appended claims.

Embodiments of the present invention provide a method for implementing user equipment cooperation and an apparatus, so that an access network device can control a plurality of user equipments to perform user equipment cooperation.

According to the embodiments of the present invention, efficiency of performing user equipment cooperation by the first user equipment and the second user equipment that are controlled by the access network device can be improved. In different user equipment cooperation manners, a corresponding first subframe format is designed, and the first user equipment and the second user equipment may complete a user equipment cooperation process by using first subframes in different formats.

These aspects or other aspects of this application are clearer and more comprehensible in descriptions of the following embodiments.

### BRIEF DESCRIPTION OF DRAWINGS

FIG. 1 is a schematic flowchart of user equipment cooperation
FIG. 2 is a schematic architectural diagram of a communications system
FIG. 3 is a schematic structural diagram of a first subframe
FIG. 4 is a schematic structural diagram of another first subframe
FIG. 5 is a schematic structural diagram of another first subframe
FIG. 6 is a schematic structural diagram of another first subframe
FIG. 7 is a schematic flowchart of user equipment cooperation
FIG. 8 is a time-domain diagram of user equipment cooperation
FIG. 9 is a schematic flowchart of other user equipment cooperation
FIG. 10 is a time-domain diagram of other user equipment cooperation
FIG. 11 is a schematic flowchart of other user equipment cooperation
FIG. 12 is a time-domain diagram of other user equipment cooperation
FIG. 13A is a schematic structural diagram of a network device and
FIG. 13B is a schematic structural diagram of another network device

### DESCRIPTION OF EMBODIMENTS

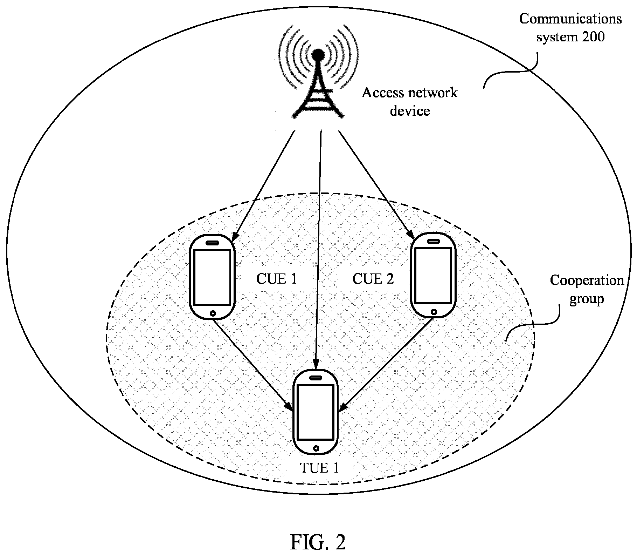

FIG. 2 shows a communications system 200 according to an embodiment of the present invention. The communications system 200 shown in FIG. 2 includes an access network device and a plurality of user equipments. The plurality of user equipments include: CUE 1, CUE 2, and TUE 1. The CUE 1, the CUE 2, and the TUE 1 form a cooperation group. In the cooperation group, the CUE 1 and the CUE 2 can help the TUE 1 perform cooperative communication. During specific implementation, the CUE 1, the CUE 2, and the TUE 1 may form the cooperation group after configuration performed by the access network device, or the CUE 1, the CUE 2, and the TUE 1 form the cooperation group after negotiation through sidelink communication interaction therebetween. The cooperation group corresponds to a cooperation group identifier (English: Cooperation Group ID, CGID for short). The CGID is configured by the access network device and is notified to all members in the cooperation group, namely, the CUE 1, the CUE 2, and the TUE 1. The cooperation group identifier is unique to at least one cell (cell). In addition, the cooperation group identifier may not be explicitly defined or explicitly allocated by the access network device to a user. Instead, an identifier of the TUE 1 is directly used. To be specific, after detecting the identifier of the TUE 1, the CUE 1 and the CUE 2 may receive, after determining, downlink data sent by the access network device to the TUE 1, to perform user equipment cooperative transmission.

For example, in an application scenario, some users have relatively low network quality of service and relatively poor user experience, because the TUE 1 is located at an edge of a network coverage area, or interference of a surrounding environment to a network service is relatively high. The CUE 1 and the CUE 2 are located in a central area of the network coverage area, or a surrounding network environment of the CUE 1 and the CUE 2 is relatively good, so that the CUE 1 and the CUE 2 can help the TUE 1 with relatively poor network quality perform cooperative communication. The CUE 1 and the TUE 1, and the CUE 2 and the TUE 1 may exchange some information by using a sidelink communication technology, to improve the network quality of the TUE 1. For example, the access network device sends downlink data in a multicast manner by using the cooperation group identifier, and a final destination address of the downlink data is the TUE 1. The CUE 1, the CUE 2, and the TUE 1 decode the downlink data by using the cooperation group identifier. When the TUE 1 cannot correctly receive the downlink data, the CUE 1 and/or the CUE 2 may forward the received downlink data from the access network device to the TUE 1, thereby greatly increasing a probability that the TUE 1 can correctly decode the downlink data.

In this embodiment of the present invention, the CUE 1 (or the CUE 2) and the TUE 1 may perform in-band (English: In-Band) user equipment cooperation. In other words, the CUE 1 (or the CUE 2) and the TUE 1 perform user equipment cooperation within a serving frequency band of the access network device. Alternatively, the CUE 1 (or the CUE 2) and the TUE 1 may perform out-of-band (English: Out-of-Band) user equipment cooperation. In other words, the CUE 1 (or the CUE 2) and the TUE 1 do not perform user equipment cooperation within a serving frequency band of the access network device. For example, the CUE 1 (or the CUE 2) and the TUE 1 perform user equipment cooperation on an unlicensed frequency band. Whether the CUE 1 (or the CUE 2) and the TUE 1 perform in-band or out-of-band user equipment cooperation may be notified by the access network device. A message indicating whether the CUE 1 (or the CUE 2) and the TUE 1 perform in-band or out-of-band user equipment cooperation requires an indication including at least 1-bit information (to be specific, "0" and "1" respectively represent two different cases, for example, a bit 0 represents that the CUE 1 (or the CUE 2) and the TUE 1 perform in-band user equipment cooperation, and a bit 1 represents that the CUE 1 (or the CUE 2) and the TUE 1 perform out-of-band user equipment cooperation). The indication may be carried in downlink control information (for example, DCI, Downlink Control Information) of the access network device, or system information (for example, SIB, System Information Block), or other upper-layer signaling (for example, radio resource control (English: Radio Resource Control, RRC for short) signaling).

In the embodiments of the present invention, in some cases, the UE may be a mobile device, for example, a mobile phone, a personal digital assistant (English: Personal Digital Assistant, PDA for short), a handheld or laptop computer, and a similar device with a telecommunication capability. The UE may include a device and an associated removable storage module (for example, including but not limited to: a subscriber identity module (English: Subscriber Identity Module, SIM for short) application, a universal subscriber identity module (English: Universal Subscriber Identity Module, USIM for short) application, or a universal integrated circuit card (English: Universal Integrated Circuit Card, UICC for short) of a removable user identify module (English: Removable User Identity Module, R-UIM for short) application). Optionally, the UE may include a device that does not include the module. In another case, the UE may be a non-portable device having a similar capability, for example, a desktop computer, a set top box, or a network device. The UE may alternatively be any hardware or software component that is used by a user to initiate a communication session. In addition, the user equipment described in the embodiments of the present invention may also be referred to as an access terminal, a terminal device, a subscriber unit, a subscriber station, a mobile station, a mobile console, a remote station, a remote terminal, a mobile device, a user terminal, a terminal, a wireless communications device, a user agent, or a user apparatus.

In the embodiments of the present invention, the access network device may include a system and a device improved from an equivalent device in a conventional wireless telecommunications system. The advanced or next-generation device may be included in an evolved wireless communications standard (for example, Long Term Evolution (English: Long Term Evolution, LTE for short)). For example, an LTE system may include a NodeB (evolved NodeB, eNB), a wireless access point, or a similar component in an evolved universal terrestrial radio access network (English: Evolved Universal Terrestrial Radio Access Network, E-UTRAN for short), instead of a conventional base station. Any such component is referred to as an eNB in this specification. However, it should be understood that such component may not necessarily be an eNB. In a next generation communications system, the eNB in the LTE system is replaced by a gNB. In addition, the access network device may also be referred to as a base station.

In the embodiments of the present invention, sidelink communication may also be referred to as "device-to-device (English: Device-to-Device, D2D for short)" communication, "a proximity service (English: Proximity Service, ProSe)", "direct communication between devices", or the like.

FIG. 2 shows an example of the communications system 200 that includes one access network device, two CUEs, and one TUE. It should be noted that the communications system 200 may include more than one access network device, may include more than two CUEs, and may include more than one TUE. This is not limited in the embodiments of the present invention.

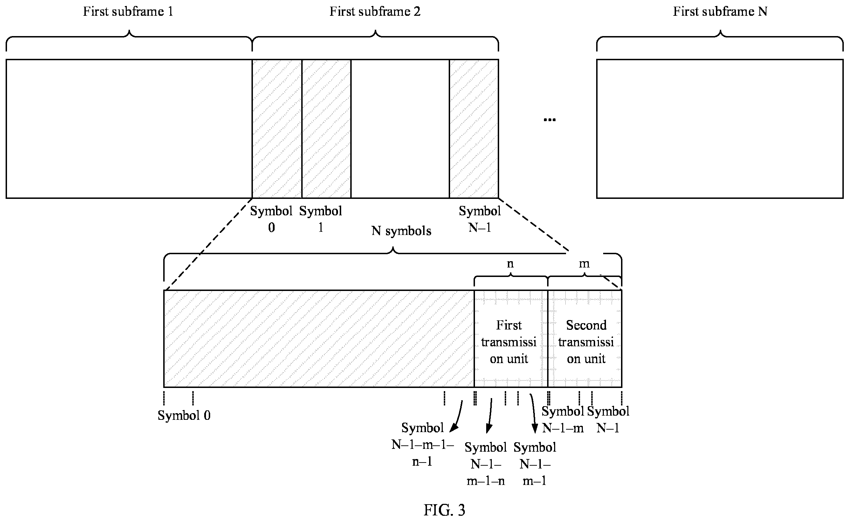

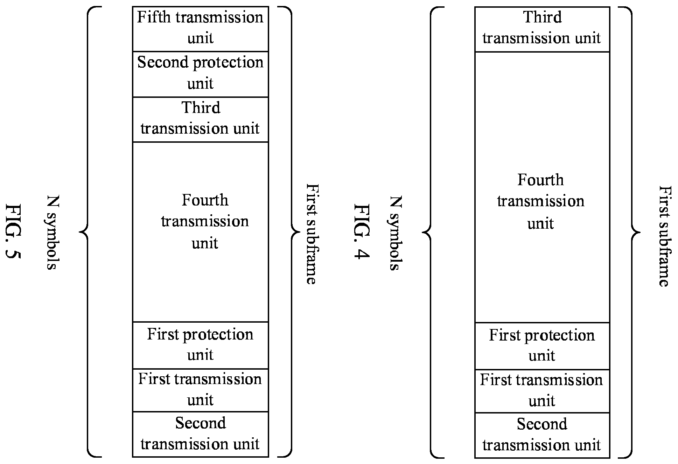

Three types of structures of first subframes provided in the embodiments of the present invention are first described with reference to FIG. 4 to FIG. 6. In a wireless communications system, a concept of a radio frame (English: radio frame) is defined in time domain. Each radio frame includes several subframes (English: subframe), and one subframe includes several symbols (English: symbol). The following operations may be completed in a same subframe: A gNB sends downlink control information (optional) to CUE and TUE; sidelink information (including at least one of control information and data information) is sent or received during sidelink communication between the CUE and the TUE; and the TUE sends uplink feedback information (also belonging to control information) to the gNB. The subframe is also referred to as a self-contained subframe (self-contained subframe). The subframe is defined as a first subframe in the embodiments of the present invention, and may be named as a cooperative subframe or may have another name. FIG. 3 is a schematic structural diagram of a first subframe according to an embodiment of the present invention. In this embodiment of the present invention, the first subframe includes *N* symbols (a first symbol is numbered 0, and a last symbol is numbered N-1). Last *m*(*m* ≥ 1, *m* ∈ Z) symbols in the first subframe, namely, symbols {*N*-1-*m,···*,*N -*1} form a second transmission unit. The second transmission unit is used by the TUE to perform uplink transmission. The uplink feedback information sent by the TUE to the gNB is carried in the second transmission unit. Before the second transmission unit, there are *n*(*n* ≥ 1, *n* ∈ *Z*) symbols, namely, symbols {*N*-1-*m*-1-*n,···,N*-1-*m*-1}. The n symbols form a first transmission unit. The first transmission unit is used by the TUE to perform sidelink transmission. Sidelink feedback information sent by the TUE to the CUE is carried in the first transmission unit. Symbols {0,*···,N-*1*-m-1-n-*1} are used by the gNB, the CUE, or the TUE to send or receive other information (specific included information depends on different user equipment cooperation modes and categories). For example, the first transmission unit may be named as a sidelink reverse control (SL Reverse Control) information unit, and the second transmission unit may be named as an uplink control (UL Control) information unit. In the foregoing mathematical expressions, (*m + n*) *< N*.

The symbols {0,···,*N*-1-*m*-1-*n*-1} in FIG. 3 may be used for different purposes based on different user equipment cooperation types. Specifically, user equipment cooperation may have two modes (Mode): Mode 1 is defined as a user equipment autonomous mode (UE Autonomous), and Mode 2 is defined as a user equipment scheduling mode (UE Scheduled Mode). In Mode 2, there are two categories (Category): Category 1 is defined as a user equipment independent category, and Category 2 is defined as a user equipment unified category.

For the user equipment autonomous mode, downlink control information is not required in each first subframe, and the downlink control information is transmitted to the TUE and the CUE by using a second subframe. Herein, the second subframe is a type of subframe different from the first subframe. For a structure of the second subframe, refer to a subframe structure in an existing LTE system. For example, the second subframe includes at least a downlink control information transmission unit and a downlink data transmission unit. The second subframe may be named as a non-cooperative subframe or may have another name. For the user equipment scheduling mode, downlink control information is required in each first subframe, and the downlink control information is used to schedule and instruct the CUE and the TUE to perform sending and receiving during sidelink communication. For the user equipment independent category, sidelink data (SL Data) sent by the CUE necessarily includes sidelink control (SL Control) information, and the sidelink control information is used to instruct the TUE to receive the sidelink data. For the user equipment unified category, the sidelink data sent by the CUE does not necessarily correspond to the sidelink control information.

Specifically, FIG. 4 is a schematic structural diagram of another first subframe according to an embodiment of the present invention. The first subframe may be used by the CUE and the TUE to perform user equipment cooperation when the user equipment cooperation mode is the user equipment autonomous mode. As shown in FIG. 4, the first subframe includes a first transmission unit and a second transmission unit. In addition, the first subframe further includes a third transmission unit, a fourth transmission unit, and a first protection unit. The third transmission unit is adjacent to the fourth transmission unit, the third transmission unit is prior to the fourth transmission unit, and the fourth transmission unit is prior to the first transmission unit. The third transmission unit is used by the CUE to send, to the TUE, sidelink control information corresponding to sidelink data. The fourth transmission unit is used by the CUE to send the sidelink data to the TUE. The first protection unit in FIG. 4 represents a protection symbol (including a size of at least one symbol), and is used by the TUE to provide protection for sending and receiving processing. It should be noted that, when the TUE receives the sidelink data, the TUE needs a period of time to perform a series of receiving processing on the sidelink data and prepare data that needs to be sent. Therefore, a period of time, namely, the first protection unit is reserved in the subframe. For example, the third transmission unit may be named as a sidelink control (SL Control) unit, and the fourth transmission unit may be named as a sidelink data (SL Data) unit.

FIG. 5 is a schematic structural diagram of another first subframe according to an embodiment of the present invention. The first subframe may be used by the CUE and the TUE to perform user equipment cooperation when the user equipment cooperation mode is the user equipment scheduling mode and the user equipment cooperation category is the user equipment independent category. As shown in FIG. 5, the first subframe includes a first transmission unit and a second transmission unit. In addition, the first subframe further includes a third transmission unit, a fourth transmission unit, a fifth transmission unit, a first protection unit, and a second protection unit. The third transmission unit is used by the CUE to send, to the TUE, sidelink control information corresponding to sidelink data. The fourth transmission unit is used by the CUE to send the sidelink data to the TUE. The fifth transmission unit is used by the gNB to send downlink control information to the CUE and the TUE. The first protection unit in FIG. 5 represents a protection symbol (including a size of at least one symbol), and is mainly used by the TUE to provide protection for sending and receiving processing. The second protection unit in FIG. 5 also represents a protection symbol (including a size of at least one symbol), and is used by the CUE to provide protection for sending and receiving processing. For example, the fifth transmission unit may be named as a downlink control (DL Control) information unit.

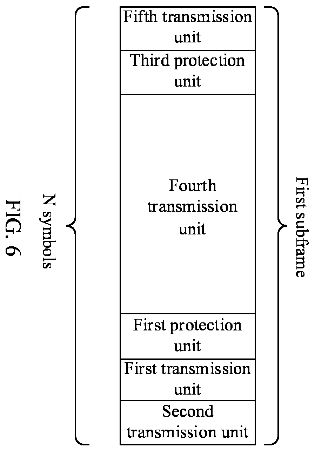

FIG. 6 is a schematic structural diagram of another first subframe according to an embodiment of the present invention. The first subframe may be used by the CUE and the TUE to perform user equipment cooperation when the user equipment cooperation mode is the user equipment scheduling mode and the user equipment cooperation category is the user equipment unified category. As shown in FIG. 6, the first subframe includes a first transmission unit and a second transmission unit. In addition, the first subframe further includes a fourth transmission unit, a first protection unit, and a third protection unit. The fourth transmission unit is used by the CUE to send sidelink data to the TUE. The first protection unit in FIG. 6 represents a protection symbol (including a size of at least one symbol), and is mainly used by the TUE to provide protection for sending and receiving processing. The third protection unit in FIG. 6 also represents a protection symbol (including a size of at least one symbol), and is used by the CUE to provide protection for sending and receiving processing.

It should be noted that, although the first subframe structures shown in FIG. 3 to FIG. 6 separately correspond to two user equipment cooperation modes and user equipment cooperation categories, a structure of the first subframe does not necessarily correspond to a user equipment cooperation mode and (or) category.

It should be noted that, cooperative control information described in the embodiments of the present invention is downlink control information sent by the access network device, and may be L1 layer signaling or L2 layer signaling. The cooperative control information may indicate a user equipment cooperation mode and/or category. For example, 2 bits may be used to indicate the two user equipment cooperation modes and the two user equipment cooperation categories described in the embodiments of the present invention. For example, when the bits are 00, it indicates that the user equipment cooperation mode is the user equipment autonomous mode. When the bits are 01, it indicates that the user equipment cooperation mode is the user equipment scheduling mode, and that the user equipment cooperation category is the user equipment independent category. When the bits are 10, it indicates that the user equipment cooperation mode is the user equipment scheduling mode, and that the user equipment cooperation category is the user equipment unified category. Alternatively, two formats of cooperative control information are defined to respectively indicate the two user equipment cooperation modes. For example, a cooperative control information format X is defined to indicate that the user equipment cooperation mode is the user equipment autonomous mode, and a cooperative control information format Y is defined to indicate that the user equipment cooperation mode is the user equipment scheduling mode. When the user equipment cooperation category is the user equipment independent category, the cooperative control information format Y is bound to IDs of different users. To be specific, CUE 1 may obtain, after decoding by using an ID of the CUE 1, the cooperative control information format Y configured by the gNB for the CUE 1; CUE 2 may obtain, after decoding by using an ID of the CUE 2, the cooperative control information format Y configured by the gNB for the CUE 2; and TUE 1 may obtain, after decoding by using an ID of the TUE 1, the cooperative control information format Y configured by the gNB for the TUE 1. When the user equipment cooperation category is the user equipment unified category, the cooperative control information format Y is bound to a cooperation group ID. To be specific, the CUE 1, the CUE 2, and the TUE 1 may obtain, after decoding by using the cooperation group ID, the cooperative control information format Y configured by the gNB for a cooperation group. The CUE determines, based on the cooperative control information format, to use which user equipment cooperation mode and/or user equipment cooperation category. In the user equipment autonomous mode, the CUE may autonomously select a physical transmission resource used during transmission of sidelink data and control information of the sidelink data. For example, an independent physical transmission resource block is allocated to the CUE before delivery. When performing sidelink communication with the TUE, the CUE may autonomously select at least a part of physical transmission resource from the pre-allocated physical transmission resource to perform sidelink transmission. Alternatively, the cooperative control information may carry information about a physical transmission resource allocated by the gNB to the CUE. When performing sidelink communication with the TUE, the CUE may autonomously select at least a part of physical transmission resource from the physical transmission resource allocated by the gNB to the CUE, to perform sidelink transmission. In the user equipment scheduling mode and in the user equipment independent category, a physical transmission resource used for sidelink transmission between the CUE and the TUE is allocated by the gNB and carried in the cooperative control information, and the gNB may allocate different physical transmission resources for different CUEs. In the user equipment scheduling mode and in the user equipment unified category, a physical transmission resource used for sidelink transmission between the CUE and the TUE is allocated by the gNB and carried in the cooperative control information, and the gNB allocates a same physical transmission resource for different CUEs.

The present invention provides a specific method for implementing user equipment cooperation between first user equipment and second user equipment under control of an access network device. In different user equipment cooperation modes and categories, a corresponding first subframe format is designed. The first user equipment and the second user equipment may use the first subframe under control of the access network device, and complete a user equipment cooperation process with optimal resource configuration. According to the implementation method in the present invention, the user equipment cooperation can meet requirements in different scenarios more robustly in a condition of a relatively low latency, thereby improving quality of service and optimizing system performance.

The following describes a user equipment cooperation process in different user equipment cooperation modes and/or user equipment cooperation categories according to an embodiment of the present invention.

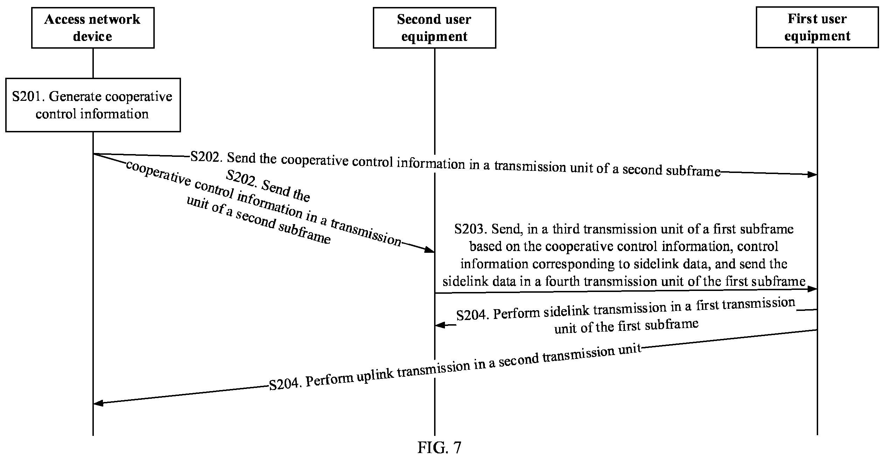

Based on the schematic architectural diagram of the system shown in FIG. 2, FIG. 7 is a flowchart of a user equipment cooperation method according to an embodiment of the present invention. In this embodiment of the present invention, a user equipment cooperation mode is a user equipment autonomous mode. The cooperation method includes the following steps.

S201. An access network device generates cooperative control information, where the cooperative control information is used to instruct first user equipment to perform sidelink transmission in a first transmission unit of a first subframe and perform uplink transmission in a second transmission unit of the first subframe, and the cooperative control information is further used to instruct second user equipment to send, to the first user equipment in a third transmission unit of the first subframe, control information corresponding to sidelink data, and send the sidelink data to the first user equipment in a fourth transmission unit of the first subframe.

In this embodiment of the present invention, the sidelink transmission includes that the first user equipment sends feedback information to the second user equipment. The first user equipment is TUE, and the second user equipment is CUE. There are one or more second user equipments. There are one or more first subframes. The first subframe is the first subframe shown in FIG. 4.

In this embodiment of the present invention, the cooperative control information includes one or more types of the following information: 1. downlink scheduling information used by the CUE and the TUE to receive downlink data sent by the access network device; 2. sidelink scheduling information used by the CUE and the TUE to perform user equipment cooperation, including: a physical transmission resource used by the CUE to send the control information of the sidelink data to the TUE, a physical transmission resource used by the CUE to send the sidelink data to the TUE, a physical transmission resource used by the TUE to send sidelink reverse control information to the CUE, and a physical transmission resource used by the TUE to send uplink control information to a gNB; 3. a sending parameter (for example, a modulation and coding scheme (English: Modulation and Coding Scheme, MCS for short) or antenna configuration) used by the CUE to send the sidelink control information to the TUE and used by the TUE to send the sidelink reverse control information to the CUE; 4. uplink scheduling information used by the TUE to send uplink feedback information to the access network device; and 5. a forwarding scheme (English: Forwarding Scheme) used to instruct the CUE to send the sidelink data to the TUE, where the forwarding scheme includes but is not limited to: an amplify-and-forward (English: Amplify-and-forward, AF for short) scheme, a decode-and-forward (English: Decode-and-forward, DF for short) scheme, a compress-and-forward (English: Compress-and-forward, CF for short) scheme, and a soft-forwarding (English: Soft-Forwarding, SF for short) scheme.

S202. The access network device sends the cooperative control information to the first user equipment and the second user equipment in a transmission unit of a second subframe.

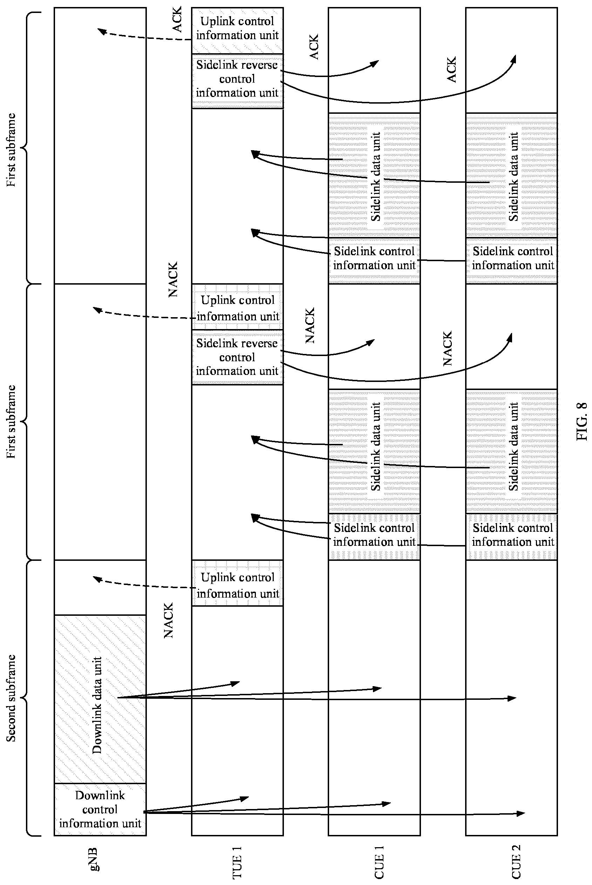

Specifically, this step is described with reference to a time-domain diagram of a user equipment cooperation process shown in FIG. 8. A gNB sends, to TUE 1, CUE 1, and CUE 2 in a multicast manner, downlink control information in a downlink control information transmission unit of the second subframe and downlink data in a downlink data unit of the second subframe by using a cooperation group ID. The gNB adds the cooperative control information to the downlink control information.

S203. The second user equipment receives the cooperative control information sent by the access network device; sends, to the first user equipment in the third transmission unit of the first subframe based on the cooperative control information, the control information corresponding to the sidelink data; and sends the sidelink data to the first user equipment in the fourth transmission unit of the first subframe.

Specifically, the second user equipment may successfully decode the received downlink control information by using the cooperation group ID, obtain the cooperative control information from the downlink control information, and determine, based on the cooperative control information, that the user equipment cooperation mode is the user equipment autonomous mode. If a physical transmission resource required in the sidelink transmission is preconfigured before delivery, the second user equipment selects a part of physical transmission resource from the preconfigured physical transmission resource to transmit the sidelink data and the control information of the sidelink data; or if a physical transmission resource required in the sidelink transmission is indicated in the cooperative control information, the second user equipment selects a part of physical transmission resource from the physical transmission resource indicated in the cooperative control information to transmit the sidelink data and the control information of the sidelink data. The selected physical transmission resource used to transmit the control information of the sidelink data is the third transmission unit shown in FIG. 4, and the selected physical transmission resource used to transmit the sidelink data is the fourth transmission unit shown in FIG. 4. Further, the second user equipment sends the control information of the sidelink data to the first user equipment by using the third transmission unit, and sends the sidelink data to the first user equipment by using the fourth transmission unit. The control information includes sidelink scheduling information used to instruct the first user equipment to receive the sidelink data, and the control information may further include indication information used to indicate a physical transmission resource used when the TUE feeds back sidelink information to the CUE and indication information used to indicate the physical transmission resource used when the TUE feeds back the uplink control information to the gNB.

A sending parameter (for example, an MCS or antenna configuration) used when the second user equipment sends the sidelink data and the control information of the sidelink data to the first user equipment may be the sending parameter indicated in the cooperative control information. A forwarding scheme (for example, an FS scheme, an AF scheme, a DF scheme, a CF scheme, or an SF scheme) used when the second user equipment sends the sidelink data and the control information of the sidelink data to the first user equipment may also be the forwarding scheme indicated in the cooperative control information.

Specifically, referring to FIG. 8, the CUE 1 and the CUE 2 randomly select at least a part of physical transmission resource from the physical transmission resource that is indicated in the cooperative control information and that is used by the cooperation group to perform the user equipment cooperation, to send the sidelink control information and the sidelink data. The CUE 1 and the CUE 2 select a forwarding scheme based on an indication of the cooperative control information. The TUE 1 selects, based on the indication of the cooperative control information, a forwarding scheme to receive the sidelink control information and the sidelink data. Specifically, the CUE 1 is used as an example. The CUE 1 selects, based on a channel condition of the CUE 1 and the TUE 1, a sending parameter (for example, an MCS or antenna configuration) of sending the sidelink data, adds the sending parameter into the sidelink control information, and randomly selects at least a part of physical resource from a physical resource for user equipment cooperation based on an indication of the cooperative control information, to send the sidelink control information and the sidelink data to the TUE 1. An operation performed by the CUE 2 is similar to that performed by the CUE 1.

The first user equipment receives the cooperative control information sent by the access network device, receives, in the third transmission unit based on the cooperative control information, the control information that is of the sidelink data and that is sent by the second user equipment, and receives, in the fourth transmission unit based on the control information, the sidelink data sent by the second user equipment.

Specifically, the first user equipment may successfully decode, by using the cooperation group ID, the received downlink control information sent by the access network device, and obtain the cooperative control information from the downlink control information. Because the first user equipment fails to correctly decode the downlink data sent by the access network device, the first user equipment feeds back uplink control information (for example, a NACK) to the gNB in an uplink control information unit of the second subframe based on the cooperative control information, or does not send any feedback information in an uplink control information unit of the second subframe. In addition, the first user equipment determines, based on the cooperative control information, that the user equipment cooperation mode is the user equipment autonomous mode. If the physical transmission resource required in the sidelink transmission is preconfigured before delivery, the first user equipment receives, on the preconfigured physical transmission resource, the control information that is of the sidelink data and that is sent by the second user equipment. Herein, the preconfigured physical transmission resource is greater than or equal to the third transmission unit. Therefore, the first user equipment may receive the control information, and further receive the sidelink data in the fourth transmission unit based on the control information. If the physical transmission resource required in the sidelink transmission is indicated in the cooperative control information, the first user equipment receives, on the physical transmission resource indicated in the cooperative control information, the control information that is of the sidelink data and that is sent by the second user equipment. Herein, the physical transmission resource indicated in the cooperative control information is greater than or equal to the third transmission unit. Therefore, the first user equipment may receive the control information, and further receive the sidelink data in the fourth transmission unit based on the control information. The control information includes the sidelink scheduling information used to instruct the first user equipment to receive the sidelink data.

Specifically, referring to FIG. 8, the TUE 1 receives, based on the sidelink control information sent by the CUE 1 in a sidelink control information unit (corresponding to a first sidelink control information unit in FIG. 8), the sidelink data sent by the CUE 1 in a sidelink data unit (corresponding to a first sidelink data unit in FIG. 8); and receives, based on the sidelink control information sent by the CUE 2 in a sidelink control information unit (corresponding to a first sidelink control information unit in FIG. 8), the sidelink data sent by the CUE 2 in a sidelink data unit (corresponding to a first sidelink data unit in FIG. 8).

S204. The first user equipment performs, based on the cooperative control information, the sidelink transmission in the first transmission unit of the first subframe and the uplink transmission in the second transmission unit of the first subframe.

Referring to FIG. 8, if the TUE 1 cannot correctly decode the sidelink data from the CUE 1 and the sidelink data from the CUE 2, the TUE 1 feeds back, in a sidelink reverse control information unit (corresponding to a first sidelink reverse control information unit in FIG. 8) based on an indication of the sidelink control information sent by the CUE 1, a NACK to the CUE 1 by using the sending parameter indicated in the cooperative control information; and feeds back, in a sidelink reverse control information unit (corresponding to a first sidelink reverse control information unit in FIG. 8) based on an indication of the sidelink control information sent by the CUE 2, a NACK to the CUE 2 by using the sending parameter indicated in the cooperative control information. The TUE 1 feeds back uplink control information (for example, a NACK) to the gNB in an uplink control information unit (corresponding to second uplink control information unit in FIG. 8) of the first subframe based on an indication of the cooperative control information, or does not send any feedback information in an uplink control information unit of the first subframe. The user equipment cooperation is continuously performed in a next first subframe (which needs to be within the physical resource configured by the gNB for the user equipment cooperation). In other words, steps S203 to S205 are repeated.

If the TUE 1 correctly decodes the sidelink data from the CUE 1 and the sidelink data from the CUE 2, the TUE 1 feeds back, in a sidelink reverse control information unit (corresponding to a first sidelink reverse control information unit in FIG. 8) based on each of an indication of the sidelink control information sent by the CUE 1 and an indication of the sidelink control information sent by the CUE 2, an ACK to each of the CUE 1 and the CUE 2 by using a sending parameter indicated in the cooperative control information; and the TUE 1 feeds back uplink control information (for example, an ACK) to the gNB in an uplink control information unit (for example, corresponding to a third uplink control information unit in FIG. 8) of the first subframe based on an indication of the cooperative control information. The user equipment cooperation process ends. It should be noted that, the CUE 1 and the CUE 2 may feed back the uplink control information (for example, an ACK) to the gNB in an uplink control information unit (corresponding to third uplink control information unit in FIG. 8) of the first subframe after the ACK sent by the TUE 1 is received.

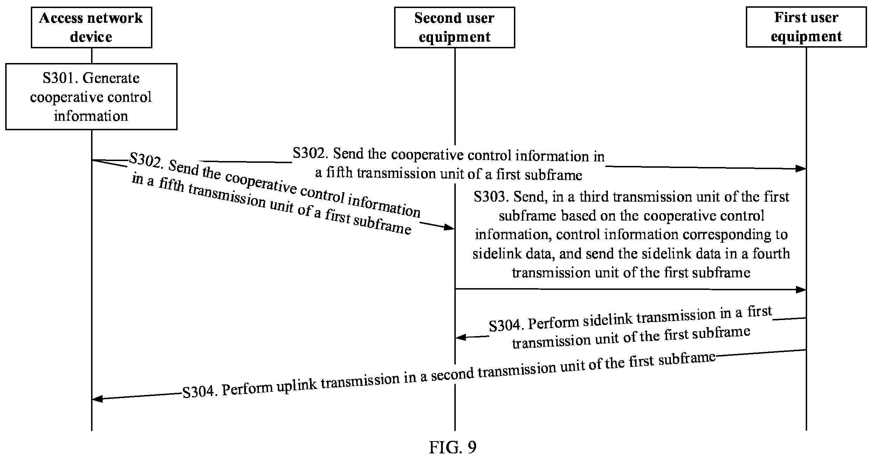

Based on the schematic architectural diagram of the system shown in FIG. 2, FIG. 9 is a flowchart of another user equipment cooperation method according to an embodiment of the present invention. In this embodiment of the present invention, a user equipment cooperation mode is a user equipment scheduling mode, and a user equipment cooperation category is a user equipment independent category. The cooperation method includes the following steps.

S301. An access network device generates cooperative control information, where the cooperative control information is used to instruct first user equipment to perform sidelink transmission in a first transmission unit of a first subframe and perform uplink transmission in a second transmission unit of the first subframe, and the cooperative control information is further used to instruct second user equipment to send, to the first user equipment in a third transmission unit of the first subframe, control information corresponding to sidelink data, and send the sidelink data to the first user equipment in a fourth transmission unit of the first subframe.

In this embodiment of the present invention, the sidelink transmission includes that the first user equipment sends feedback information to the second user equipment. The first user equipment is TUE, and the second user equipment is CUE. There may be one or more second user equipments. There may be one or more first subframes, and the first subframe is the first subframe shown in FIG. 5.

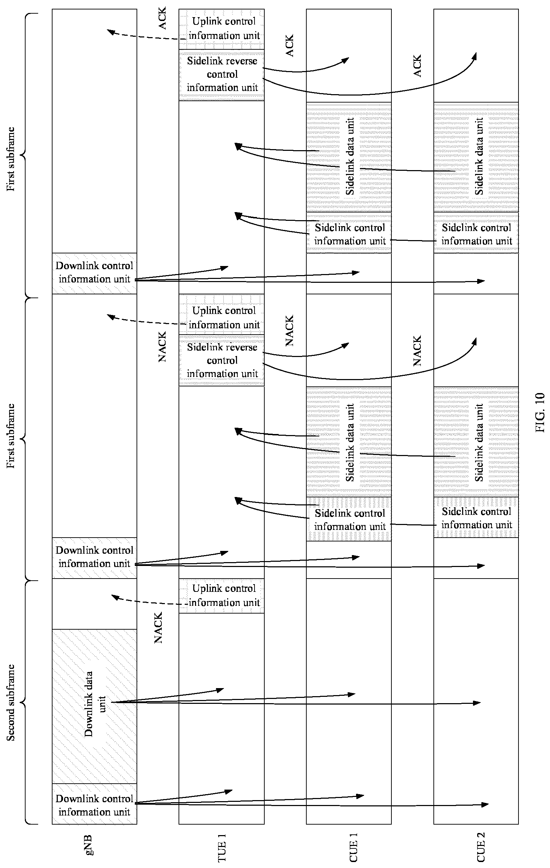

This step is described with reference to a time-domain diagram of a user equipment cooperation process shown in FIG. 10. Before sending the cooperative control information, a gNB sends downlink control information (corresponding to first downlink control information unit in FIG. 10) and downlink data to TUE 1, CUE 1, and CUE 2 in a transmission unit of a second subframe in a multicast manner by using a cooperation group ID. Herein, the downlink control information is further used to instruct the CUE 1, the CUE 2, and the TUE 1 to perform user equipment cooperation. The CUE 1, the CUE 2, and TUE 1 successfully decode the downlink control information (corresponding to the first downlink control information unit in FIG. 10) by using the cooperation group ID. The CUE 1, the CUE 2, and the TUE 1 receive the downlink data based on the downlink control information. In addition, the CUE 1, the CUE 2, and the TUE 1 determine, based on the downlink control information, that the user equipment cooperation needs to be performed. Because the TUE 1 fails to correctly decode the downlink data, the TUE 1 feeds back uplink control information (for example, a NACK) (corresponding to first uplink control information unit in FIG. 10) to the gNB on an uplink control channel of the second subframe based on an indication of the downlink control information (corresponding to the first downlink control information unit in FIG. 10), or does not send any feedback information on an uplink control channel of the second subframe.

In this embodiment of the present invention, the cooperative control information includes: 1. sidelink scheduling information used by the CUE to perform the user equipment cooperation, to be specific, a physical resource used by the CUE to perform the user equipment cooperation (including the sidelink control information (corresponding to the third transmission unit in FIG. 5) and the sidelink data (corresponding to the fourth transmission unit in FIG. 5), sidelink reverse control information (corresponding to the first transmission unit in FIG. 5) fed back by the TUE 1 to the CUE, and uplink control information (corresponding to the second transmission unit in FIG. 5) fed back by the TUE 1 to the gNB). In addition, the cooperative control information may further include one or more types of the following information: 2. a forwarding scheme (English: Forwarding Scheme) used to instruct the CUE to send the sidelink data to the TUE 1, where the forwarding scheme includes but is not limited to: an AF scheme, a DF scheme, a CF scheme, and an SF scheme; and 3. a sending parameter (for example, an MCS or antenna configuration) used by the CUE and the TUE 1 to respectively send the sidelink control information and the sidelink reverse control information. It should be noted that, the sending parameter (for example, an MCS or antenna configuration) used by the CUE and the TUE 1 to respectively send the sidelink control information and the sidelink reverse control information may be predefined, or may be obtained by using system information (English: System Information Block, SIB for short) of the gNB.

S302. The access network device sends the cooperative control information to the first user equipment and the second user equipment in a fifth transmission unit of the first subframe.

Specifically, the gNB sends the cooperative control information in the fifth transmission unit (corresponding to a second downlink control information unit in FIG. 10) of the first subframe, and adds the cooperative control information into the fifth transmission unit.

S303. The second user equipment receives the cooperative control information sent by the access network device, sends, to the first user equipment in the third transmission unit based on the cooperative control information, control information corresponding to the sidelink data, and sends the sidelink data to the first user equipment in the fourth transmission unit.

Specifically, the second user equipment determines, based on the cooperative control information, that the user equipment cooperation mode is the user equipment scheduling mode, and that the user equipment cooperation category is the user equipment independent category. Further, based on a physical transmission resource indicated in the cooperative control information, the second user equipment sends the control information of the sidelink data to the first user equipment in the third transmission unit, and sends the sidelink data to the first user equipment in the fourth transmission unit. Herein, the physical transmission resource used to transmit the control information and the physical transmission resource used to transmit the sidelink data are both indicated in the cooperative control information. The control information includes sidelink scheduling information used to instruct the first user equipment to receive the sidelink data.

If the cooperative control information uses 2 bits to indicate the user equipment cooperation mode and the user equipment cooperation category, the second user equipment directly parses the 2 bits to determine that the user equipment cooperation mode is the user equipment scheduling mode, and that the user equipment cooperation category is the user equipment independent category. If the cooperative control information is identified by using a format of the cooperative control information, the second user equipment determines, based on the format of the cooperative control information, that the format of the cooperative control information is a cooperative control information format Y; and the second user equipment may further decode, by using an ID of the second user equipment, the cooperative control information configured by the gNB, and may determine that the user equipment cooperation mode is the user equipment scheduling mode, and that the user equipment cooperation category is the user equipment independent category.

The CUE 1 is used as an example. The CUE 1 determines that the user equipment cooperation category is the user equipment independent category, and then sends the sidelink control information and the sidelink data on user equipment cooperation physical resources specified in the cooperative control information. The CUE 1 selects a forwarding scheme based on an indication of the cooperative control information. The TUE 1 selects, based on the indication of the cooperative control information, a forwarding scheme to process the sidelink data. An operation performed by the CUE 2 is similar to that performed by the CUE 1.

The first user equipment receives the cooperative control information sent by the access network device, receives, in the third transmission unit based on the cooperative control information, the control information that is of the sidelink data and that is sent by the second user equipment, and receives, in the fourth transmission unit based on the control information, the sidelink data sent by the second user equipment.

Specifically, the first user equipment obtains the cooperative control information, and determines, based on the cooperative control information, that the user equipment cooperation mode is the user equipment scheduling mode, and that the user equipment cooperation category is the user equipment independent category. In this case, a physical transmission resource required in the sidelink transmission is indicated in the cooperative control information, and the first user equipment receives, on the physical transmission resource indicated in the cooperative control information, the control information that is of the sidelink data and that is sent by the second user equipment. Herein, the physical transmission resource indicated in the cooperative control information is equal to the third transmission unit. Therefore, the first user equipment may receive the control information, and further receive the sidelink data in the fourth transmission unit based on the control information. The control information includes sidelink scheduling information used to instruct the first user equipment to receive the sidelink data.

Specifically, referring to FIG. 10, the TUE 1 respectively receives the sidelink data from the CUE 1 and the sidelink data from the CUE 2 based on an indication of the sidelink control information from the CUE 1 and an indication of the sidelink control information from the CUE 2.

S304. The first user equipment performs, based on the cooperative control information, the sidelink transmission in the first transmission unit and the uplink transmission in the second transmission unit.

Referring to FIG. 10, if the TUE 1 cannot correctly decode the sidelink data from the CUE 1 and the sidelink data from the CUE 2, the TUE 1 feeds back, in a sidelink reverse control information unit based on an indication of the sidelink control information sent by the CUE 1 and an indication of the sidelink control information sent by the CUE 2, a NACK by using a sending parameter indicated in the cooperative control information; the TUE 1 feeds back uplink control information (for example, a NACK) to the gNB in an uplink control information unit (corresponding to a second uplink control information unit in FIG. 10) of the second subframe based on an indication of the cooperative control information, or does not send any feedback information in an uplink control information unit (corresponding to a second uplink control information unit in FIG. 10) of the second subframe. The user equipment cooperation is continuously performed in a next first subframe (which needs to be within a physical resource configured by the gNB for the user equipment cooperation). In other words, steps S303 to S305 are repeated.

If the TUE 1 correctly decodes the sidelink data from the CUE 1 or the sidelink data from the CUE 2, the TUE 1 separately feeds back, in a sidelink reverse control information unit (corresponding to a second sidelink reverse control information unit in FIG. 10) based on an indication of the sidelink control information sent by the CUE 1 and an indication of the sidelink control information sent by the CUE 2, an ACK by using a sending parameter indicated in the cooperative control information; the TUE 1 feeds back uplink control information (for example, an ACK) to the gNB in an uplink control information unit (corresponding to a third uplink control information unit in FIG. 10) of the second subframe based on an indication of the cooperative control information. The user equipment cooperation process ends. It should be noted that, the CUE 1 and the CUE 2 may feed back uplink control information (for example, an ACK) (corresponding to third uplink control information unit in FIG. 10) to the gNB in an uplink control information unit of the first subframe after receiving the ACK sent by the TUE 1.

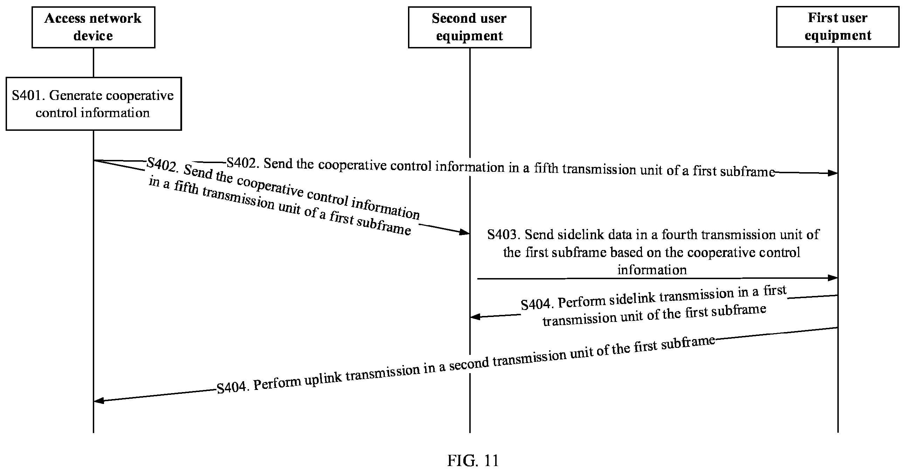

Based on the schematic architectural diagram of the system shown in FIG. 2, FIG. 11 is a flowchart of another user equipment cooperation method according to an embodiment of the present invention. In this embodiment of the present invention, a user equipment cooperation mode is a user equipment scheduling mode, and a user equipment cooperation category is a user equipment unified category. The cooperation method includes the following steps.

S401. An access network device generates cooperative control information, where the cooperative control information is used to instruct first user equipment to perform sidelink transmission in a first transmission unit of a first subframe and perform uplink transmission in a second transmission unit of the first subframe, and the cooperative control information is further used to instruct second user equipment to send sidelink data to the first user equipment in a fourth transmission unit of the first subframe.

In this embodiment of the present invention, the sidelink transmission includes that the first user equipment sends feedback information to the second user equipment. The first user equipment is TUE, and the second user equipment is CUE. There may be one or more second user equipments. There may be one or more first subframes, and the first subframe is the first subframe shown in FIG. 6.

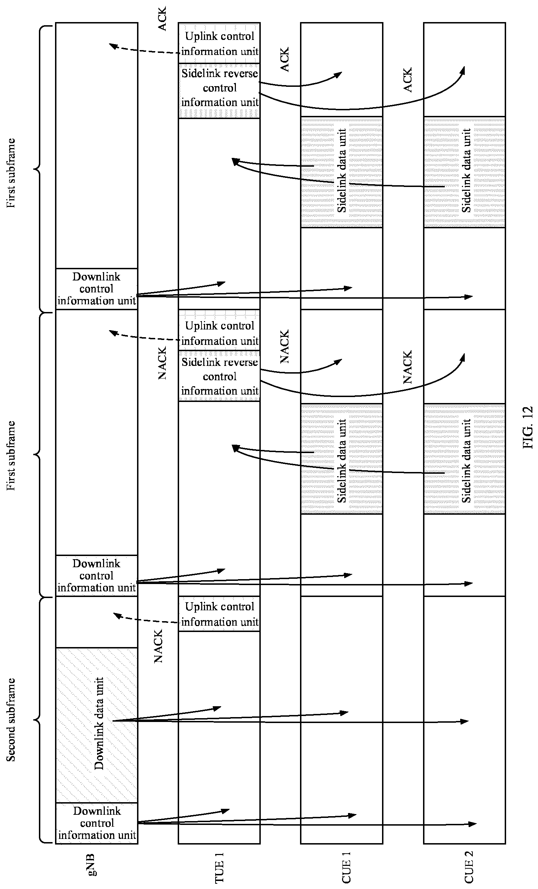

This step is described with reference to a time-domain diagram of a user equipment cooperation process shown in FIG. 12. Before sending the cooperative control information, a gNB sends downlink control information to the TUE 1, CUE 1, and CUE 2 in a downlink control information unit (corresponding to a first downlink control information unit in FIG. 12) of a second subframe in a multicast manner by using a cooperation group ID, and sends downlink data to the TUE 1, the CUE 1, and the CUE 2 in a downlink data unit of the second subframe in a multicast manner by using the cooperation group ID. The CUE 1, the CUE 2, and the TUE 1 successfully decode the downlink control information by using the cooperation group ID. The CUE 1, the CUE 2, and the TUE 1 receive the downlink data based on the downlink control information. Because the TUE 1 fails to correctly decode the downlink data, the TUE 1 feeds back uplink control information (for example, a NACK) to the gNB on an uplink control channel (corresponding to a first uplink control information unit in FIG. 12) of the second subframe based on an indication of the downlink control information, or does not send any feedback information on the uplink control channel.

In this embodiment of the present invention, the cooperative control information includes: 1. sidelink scheduling information used by the CUE and the TUE 1 to perform user equipment cooperation, to be specific, a physical resource used by the CUE to perform the user equipment cooperation (including: sidelink data (corresponding to the fourth transmission unit in FIG. 6), sidelink reverse control information (corresponding to the first transmission unit in FIG. 6) fed back by the TUE 1 to the CUE, and uplink control information (corresponding to the second transmission unit in FIG. 6) fed back by the TUE 1 to the gNB). The cooperative control information may further include one or more types of the following information: 2. a forwarding scheme (English: Forwarding Scheme) used to instruct the CUE to send sidelink data to the TUE 1, where the forwarding scheme includes but is not limited to: an AF scheme, a DF scheme, a CF scheme, and an SF scheme; and 3. a sending parameter (for example, an MCS or antenna configuration) used by the CUE and the TUE 1 to respectively send sidelink control information and sidelink reverse control information. It should be noted that, the sending parameter (for example, an MCS or antenna configuration) used by the CUE and the TUE 1 to respectively send the sidelink control information and the sidelink reverse control information may be predefined, or may be obtained by using system information of the gNB.

S402. The access network device sends the cooperative control information to the first user equipment and the second user equipment in a fifth transmission unit of the first subframe.

Specifically, the gNB sends the cooperative control information in the fifth transmission unit (corresponding to a second downlink control information unit in FIG. 12) of the first subframe, and adds the cooperative control information into the fifth transmission unit.

S403. The second user equipment receives the cooperative control information sent by the access network device, and sends the sidelink data to the first user equipment in the fourth transmission unit based on the cooperative control information.

Specifically, the CUE 1 and the CUE 2 send the sidelink data on specified user equipment cooperation physical resources based on an indication of the cooperative control information. A physical resource used by the CUE 1 is the same as that used by the CUE 2 (because the cooperative control information is specific to all members in an entire cooperation group), and content of the sidelink data is the same, in other words, CUE 1 SL Data = CUE 2 SL Data.

A sending parameter (for example, an MCS or antenna configuration) used when the second user equipment sends the sidelink data to the first user equipment may be a sending parameter indicated in the cooperative control information. A forwarding scheme (for example, an FS scheme, an AF scheme, a DF scheme, a CF scheme, or an SF scheme) used when the second user equipment sends the sidelink data to the first user equipment may also be a forwarding scheme indicated in the cooperative control information.

S404. The first user equipment receives the cooperative control information sent by the access network device, and receives, in the fourth transmission unit based on the cooperative control information, the sidelink data sent by the second user equipment.

Specifically, the first user equipment obtains the cooperative control information, and determines, based on the cooperative control information, that the user equipment cooperation mode is the user equipment scheduling mode, and that the user equipment cooperation category is a user equipment unified category. In this case, a physical transmission resource required in the sidelink transmission is indicated in the cooperative control information, and the first user equipment receives, on the physical transmission resource indicated in the cooperative control information, the sidelink data sent by the second user equipment.

S405. The first user equipment performs, based on the cooperative control information, the sidelink transmission in the first transmission unit and the uplink transmission in the second transmission unit.

Referring to FIG. 12, if the TUE 1 cannot correctly decode the sidelink data from the CUE, the TUE 1 feeds back a NACK to the CUE 1 and the CUE 2 (a physical resource used by the TUE 1 to send the NACK to the CUE 1 is the same as a physical resource used by the TUE 1 to send the NACK to the CUE 2) in a sidelink reverse control information unit (corresponding to a first sidelink reverse control information unit in FIG. 12) based on an indication of the cooperative control information; and the TUE 1 feeds back uplink control information (for example, a NACK) (corresponding to second UL Control unit in FIG. 12) to the gNB in an uplink control information unit (corresponding to second uplink control information unit in FIG. 12) of the second subframe based on an indication of the cooperative control information, or does not send any feedback information in an uplink control information unit (corresponding to second uplink control information unit in FIG. 12) of the second subframe. The user equipment cooperation is continuously performed in a next first subframe (which needs to be within a physical resource configured by the gNB for the user equipment cooperation). In other words, steps S403 to S405 are repeated.

If the TUE 1 correctly decodes the sidelink data from the CUE 1 or the sidelink data from the CUE 2, the TUE 1 feeds back an ACK to the CUE 1 and the CUE 2 (a physical resource used by the TUE 1 to send the ACK to the CUE 1 is the same as that used by the TUE 1 to send the ACK to the CUE 2) in a sidelink reverse control information unit (corresponding to a second sidelink reverse control information unit in FIG. 12) based on an indication of the cooperative control information; and the TUE 1 feeds back uplink control information (for example, an ACK) to the gNB in an uplink control information unit (corresponding to third uplink control information unit in FIG. 12) of the second subframe based on an indication of the cooperative control information. The user equipment cooperation process ends. It should be noted that, the CUE 1 and the CUE 2 may feed back uplink control information (for example, an ACK) (corresponding to third uplink control information unit in FIG. 12) to the gNB in an uplink control information unit of the first subframe after receiving the ACK sent by the TUE 1.

It should be noted that, in the foregoing embodiments of the present invention, the access network device indicates the user equipment cooperation mode and/or the user equipment cooperation category by using the cooperative control information. In actual application, only one user equipment cooperation mode and only one user equipment cooperation category may be defined. For example, a user equipment autonomous mode used when the first user equipment and the second user equipment perform user equipment cooperation is specified in a communications standard. In this case, when separately receiving the cooperative control information sent by the access network device, the first user equipment and the second user equipment determine, based on the cooperative control information, that the user equipment cooperation needs to be performed, and the user equipment cooperation may be automatically performed by using the process in the embodiment shown in FIG. 7 instead of using extra bit information or an extra format to indicate, to the first user equipment and the second user equipment, a specific user equipment cooperation mode and/or category used for user equipment cooperation.

The foregoing describes the solutions provided in the embodiments of the present invention mainly from the perspective of interaction between the access network device, the first user equipment, and the second user equipment. It may be understood that, to implement the foregoing functions, a network device (such as the access network device, the first user equipment, or the second user equipment) includes a corresponding hardware structure and/or software module for performing each function. With reference to units and algorithm steps of each example described in the embodiments disclosed in this application, the embodiments of the present invention may be implemented in a form of hardware or a combination of hardware and computer software. Whether a function is implemented by hardware or by driving hardware by computer software depends on a particular application and design constraint condition of the technical solution. A person skilled in the art may use different methods for each particular application to implement the described functions, but it should not be considered that the implementation goes beyond the scope of the technical solutions of the embodiments of the present invention.

In the embodiments of the present invention, functional unit division may be performed on the network device (such as the access network device, the first user equipment, or the second user equipment) based on the foregoing method examples. For example, each functional unit may be obtained through division based on a corresponding function, or two or more functions may be integrated into one processing unit. The integrated unit may be implemented in a form of hardware, or may be implemented in a form of a software functional unit. It should be noted that unit division is an example in the embodiments of the present invention, and is merely a logical function division. In actual implementation, another division manner may be used.

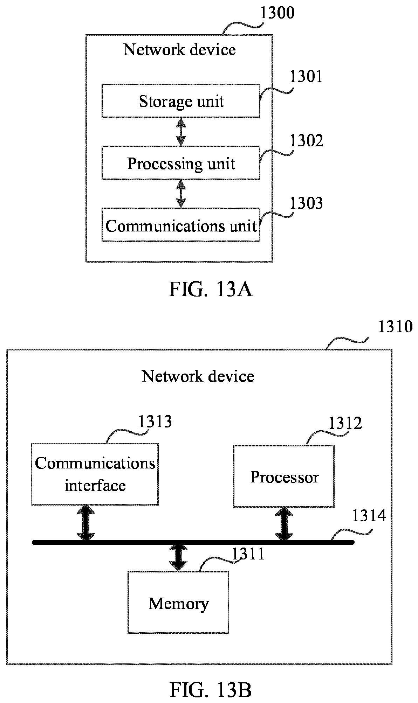

When an integrated unit is used, FIG. 13A is a possible schematic structural diagram of the network device described in the foregoing embodiments. A network device 1300 includes a processing unit 1302 and a communications unit 1303. The processing unit 1302 is configured to control and manage actions of the network device 1300. For example, the processing unit 1302 is configured to support the network device 1300 in performing step S201 in FIG. 7, step S301 in FIG. 9, step S401 in FIG. 11; and/or is configured to perform other steps in the technology described in this specification. The communications unit 1303 is configured to support communication between the network device 1300 and another network device. For example, the communications unit 1303 is configured to support the network device 1300 in performing step S202, step S203, and step S204 in FIG. 7, step S302, step S303, and step S304 in FIG. 9, step S402, step S403, and step S404 in FIG. 11; and/or is configured to perform other steps in the technology described in this specification. The network device 1300 may further include a storage unit 1301, configured to store program code and data of the network device 1300.

The processing unit 1302 may be a processor or a controller, for example, may be a central processing unit (English: Central Processing Unit, CPU for short), a general purpose processor, a digital signal processor (English: Digital Signal Processor, DSP for short), an application-specific integrated circuit (English: Application-Specific Integrated Circuit, ASIC for short), a field programmable gate array (English: Field Programmable Gate Array, FPGA for short) or another programmable logic device, a transistor logic device, a hardware component, or any combination thereof. The processing unit 1302 may implement or execute various example logical blocks, modules, and circuits described with reference to content disclosed in this application. Alternatively, the processing unit 1302 may be a combination for implementing a computing function, for example, a combination including one or more microprocessors or a combination of the DSP and a microprocessor. The communications unit 1303 may be a communications interface, a transceiver, a transceiver circuit, or the like. The communications interface is a general term, and may include one or more interfaces, for example, an interface between a first network device and a second network device, or an interface between an access network device and first user equipment, or an interface between an access network device and second user equipment. The storage unit 1301 may be a memory.

When the processing unit 1302 is a processor, the communications unit 1303 is a communications interface, and the storage unit 1301 is a memory, the network device in this embodiment of the present invention may be a network device shown in FIG. 13B.

Referring to FIG. 13B, the network device 1310 includes: a processor 1312, a communications interface 1313, and a memory 1311. Optionally, the network device 1310 may further include a bus 1314. The communications interface 1313, the processor 1312, and the memory 1311 may be connected to each other by using the bus 1314. The bus 1314 may be a peripheral component interconnect (English: Peripheral Component Interconnect, PCI for short) bus, an extended industry standard architecture (English: Extended Industry Standard Architecture, EISA for short) bus, or the like. The bus 1314 may be classified into an address bus, a data bus, a control bus, and the like. For ease of denotation, the bus is indicated by using only one bold line in FIG. 13B. However, it does not indicate that there is only one bus or only one type of bus.

The network device shown in FIG. 13A or FIG. 13B may be an access network device, a first network device, or a second network device.

Methods or algorithm steps described with reference to the content disclosed in the embodiments of the present invention may be implemented by hardware, or may be implemented by a processor by executing a software instruction. The software instruction may include a corresponding software module. The software module may be stored in a random access memory (English: Random Access Memory, RAM for short), a flash memory, a read-only memory (English: Read Only Memory, ROM for short), an erasable programmable read-only memory (English: Erasable Programmable ROM, EPROM for short), an electrically erasable programmable read-only memory (English: Electrically EPROM, EEPROM for short), a register, a hard disk, a mobile hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in a network device. Certainly, the processor and the storage medium may exist in the network device as discrete components.

A person skilled in the art should be aware that in the foregoing one or more examples, functions described in the embodiments of the present invention may be implemented by hardware, software, firmware, or any combination thereof. When the functions are implemented by software, the functions may be stored in a computer-readable medium or transmitted as one or more instructions or code in the computer-readable medium. The computer-readable medium includes a computer storage medium and a communications medium. The communications medium includes any medium that enables a computer program to be transmitted from one place to another. The storage medium may be any available medium accessible to a general purpose computer or a dedicated computer.

In the foregoing specific implementations, the objectives, technical solutions, and benefits of the embodiments of the present invention are further described in detail.

## Claims

1. A method for implementing user equipment cooperation in user equipment autonomous mode, comprising:
Generating (S201), by an access network device (1300), cooperative control information, said cooperative control information indicating that a user equipment cooperation mode is the user equipment autonomous mode, wherein the cooperative control information is used to instruct first user equipment (TUE1) to perform (S204) sidelink transmission in a first transmission unit of a first subframe and perform (S204) uplink transmission in a second transmission unit of the first subframe, the first transmission unit is adjacent to the second transmission unit, and the sidelink transmission comprises that the first user equipment sends feedback information to a second user equipment (CUE1, CUE2); and
sending (S202), by the access network device (1300), the cooperative control information to the first user equipment and the second user equipment (CUE1, CUE2) in a second subframe;
wherein the cooperative control information is further used to instruct the second user equipment (CUE1, CUE2) to send (S203), to the first user equipment (TUE1) in a third transmission unit of the first subframe, control information corresponding to sidelink data, and send the sidelink data to the first user equipment in a fourth transmission unit of the first subframe, the third transmission unit is adjacent to the fourth transmission unit, the third transmission unit is prior to the fourth transmission unit, and the fourth transmission unit is prior to the first transmission unit, wherein in the user equipment autonomous mode the second user equipment (CUE1, CUE2) selects autonomously a physical transmission resource for use during the transmission of the sidelink data and the control information of the sidelink data;
wherein the second subframe is a type of subframe different from the first subframe with a different subframe structure.

2. The method according to claim 1, wherein the second transmission unit is a last transmission unit of the first subframe.

3. A method for implementing user equipment cooperation in user equipment autonomous mode, comprising:
receiving, by first user equipment (TUE1), cooperative control information sent by an access network device in a second subframe, said cooperative control information indicating that a user equipment cooperation mode is the user equipment autonomous mode; and
performing, by the first user equipment based on the cooperative control information, sidelink transmission in a first transmission unit of a first subframe and uplink transmission in a second transmission unit of the first subframe, wherein the first transmission unit is adjacent to the second transmission unit, and the sidelink transmission comprises that the first user equipment sends feedback information to a second user equipment (CUE1, CUE2);
receiving, by the first user equipment (TUE1) in a third transmission unit of the first subframe based on the cooperative control information, control information corresponding to sidelink data, and receiving the sidelink data in a fourth transmission unit of the first subframe based on the control information, wherein the third transmission unit is adjacent to the fourth transmission unit, the third transmission unit is prior to the fourth transmission unit, and the fourth transmission unit is prior to the first transmission unit; wherein in the user equipment autonomous mode the second user equipment (CUE1, CUE2) selects autonomously a physical transmission resource for use during the transmission of the sidelink data and the control information of the sidelink data;
wherein the second subframe is a type of subframe different from the first subframe with a different subframe structure.

4. The method according to claim 3, wherein the second transmission unit is a last transmission unit of the first subframe.

5. An access network device (1300), wherein the access network device (1300) comprises a processing unit (1302) and a communications unit (1303), wherein
the processing unit (1302) is configured to generate cooperative control information, said cooperative control information indicating that a user equipment cooperation mode is the user equipment autonomous mode, wherein the cooperative control information is used to instruct first user equipment (TUE1) to perform sidelink transmission in a first transmission unit of a first subframe and perform uplink transmission in a second transmission unit of the first subframe, the first transmission unit is adjacent to the second transmission unit, and the sidelink transmission comprises that the first user equipment (TUE1) sends feedback information to a second user equipment (CUE1, CUE2); and
the communications unit is configured to send the cooperative control information to the first user equipment (TUE1) and the second user equipment (CUE1, CUE2) in a second subframe;
wherein the cooperative control information is further used to instruct the second user equipment (CUE1, CUE2) to send, to the first user equipment (TUE1) in a third transmission unit of the first subframe, control information corresponding to sidelink data, and send the sidelink data to the first user equipment (TUE1) in a fourth transmission unit of the first subframe, the third transmission unit is adjacent to the fourth transmission unit, the third transmission unit is prior to the fourth transmission unit, and the fourth transmission unit is prior to the first transmission unit; wherein in the user equipment autonomous mode the second user equipment (CUE1, CUE2) selects autonomously a physical transmission resource for use during the transmission of the sidelink data and the control information of the sidelink data;
wherein the second subframe is a type of subframe different from the first subframe with a different subframe structure.

6. The access network device according to claim 5, wherein the second transmission unit is a last transmission unit of the first subframe.

7. User equipment (TUE1), wherein the user equipment is first user equipment (TUE1), and the first user equipment (TUE1) comprises a communications unit, wherein
the communications unit is configured to receive cooperative control information sent by an access network device (1300) in a second subframe, said cooperative control information indicating that a user equipment cooperation mode is the user equipment autonomous mode; and
the communications unit (1300) is further configured to perform, based on the cooperative control information, sidelink transmission in a first transmission unit of a first subframe and uplink transmission in a second transmission unit of the first subframe, wherein the first transmission unit is adjacent to the second transmission unit, and the sidelink transmission comprises that the first user equipment sends feedback information to a second user equipment (CUE1, CUE2);
wherein the first user equipment (TUE1) is further configured to receiving in a third transmission unit of the first subframe based on the cooperative control information, control information corresponding to sidelink data, and to receive the sidelink data in a fourth transmission unit of the first subframe based on the control information, wherein the third transmission unit is adjacent to the fourth transmission unit, the third transmission unit is prior to the fourth transmission unit, and the fourth transmission unit is prior to the first transmission unit; wherein in the user equipment autonomous mode the second user equipment (CUE1, CUE2) selects autonomously a physical transmission resource for use during the transmission of the sidelink data and the control information of the sidelink data;
wherein the second subframe is a type of subframe different from the first subframe with a different subframe structure.

## Patentansprüche

1. Verfahren zum Umsetzen von Kooperation von Benutzergeräten in einem autonomen Modus für Benutzergeräte, umfassend:
Generieren (S201), durch eine Zugangsnetzwerkvorrichtung (1300), von Informationen zur kooperativen Steuerung, wobei die Informationen zur kooperativen Steuerung angeben, dass ein Kooperationsmodus für Benutzergeräte der autonome Modus für Benutzergeräte ist, wobei die Informationen zur kooperativen Steuerung verwendet werden, um ein erstes Benutzergerät (TUE1) anzuweisen, eine Sidelink-Übertragung in einer ersten Übertragungseinheit eines ersten Subframes durchzuführen (S204) und eine Uplink-Übertragung in einer zweiten Übertragungseinheit des ersten Subframes durchzuführen (S204), wobei die erste Übertragungseinheit benachbart zu der zweiten Übertragungseinheit ist und die Sidelink-Übertragung umfasst, dass das erste Benutzergerät Feedbackinformationen an ein zweites Benutzergerät (CUE1, CUE2) sendet; und
Senden (S202), durch die Zugangsnetzwerkvorrichtung (1300), der Informationen zur kooperativen Steuerung an das erste Benutzergerät und das zweite Benutzergerät (CUE1, CUE2) in einem zweiten Subframe;
wobei die Informationen zur kooperativen Steuerung ferner verwendet werden, um das zweite Benutzergerät (CUE1, CUE2) anzuweisen, in einer dritten Übertragungseinheit des ersten Subframes Steuerinformationen, die den Sidelink-Daten entsprechen, an das erste Benutzergerät (TUE1) zu senden (S203) und die Sidelink-Daten in einer vierten Übertragungseinheit des ersten Subframes an das erste Benutzergerät zu senden, wobei die dritte Übertragungseinheit benachbart zu der vierten Übertragungseinheit ist, die dritte Übertragungseinheit vor der vierten Übertragungseinheit liegt und die vierte Übertragungseinheit vor der ersten Übertragungseinheit liegt, wobei das zweite Benutzergerät (CUE1, CUE2) in dem autonomen Modus für Benutzergeräte autonom eine physische Übertragungsressource zur Verwendung während der Übertragung der Sidelink-Daten und der Steuerinformationen der Sidelink-Daten auswählt;
wobei der zweite Subframe ein Subframetyp ist, der sich von dem ersten Subframe unterscheidet und eine andere Subframestruktur aufweist.

2. Verfahren nach Anspruch 1, wobei die zweite Übertragungseinheit eine letzte Übertragungseinheit des ersten Subframes ist.

3. Verfahren zum Umsetzen von Kooperation von Benutzergeräten in einem autonomen Modus für Benutzergeräte, umfassend:
Empfangen, durch ein erstes Benutzergerät (TUE1), von Informationen zur kooperativen Steuerung, die durch eine Zugangsnetzwerkvorrichtung in einem zweiten Subframe gesendet werden, wobei die Informationen zur kooperativen Steuerung angeben, dass ein Kooperationsmodus für Benutzergeräte der autonome Modus für Benutzergeräte ist; und
Durchführen, durch das erste Benutzergerät basierend auf den Informationen zur kooperativen Steuerung, einer Sidelink-Übertragung in einer ersten Übertragungseinheit eines ersten Subframes und einer Uplink-Übertragung in einer zweiten Übertragungseinheit des ersten Subframes, wobei die erste Übertragungseinheit benachbart zu der zweiten Übertragungseinheit ist und die Sidelink-Übertragung umfasst, dass das erste Benutzergerät Feedbackinformationen an ein zweites Benutzergerät (CUE1, CUE2) sendet;
Empfangen, durch das erste Benutzergerät (TUE1) in einer dritten Übertragungseinheit des ersten Subframes basierend auf den Informationen zur kooperativen Steuerung, von Steuerinformationen, die den Sidelink-Daten entsprechen, und Empfangen der Sidelink-Daten in einer vierten Übertragungseinheit des ersten Subframes basierend auf den Steuerinformationen, wobei die dritte Übertragungseinheit benachbart zu der vierten Übertragungseinheit ist, die dritte Übertragungseinheit vor der vierten Übertragungseinheit liegt und die vierte Übertragungseinheit vor der ersten Übertragungseinheit liegt; wobei das zweite Benutzergerät (CUE1, CUE2) in dem autonomen Modus für Benutzergeräte autonom eine physische Übertragungsressource zur Verwendung während der Übertragung der Sidelink-Daten und der Steuerinformationen der Sidelink-Daten auswählt;
wobei der zweite Subframe ein Subframetyp ist, der sich von dem ersten Subframe unterscheidet und eine andere Subframestruktur aufweist.

4. Verfahren nach Anspruch 3, wobei die zweite Übertragungseinheit eine letzte Übertragungseinheit des ersten Subframes ist.

5. Zugangsnetzwerkvorrichtung (1300), wobei die Zugangsnetzwerkvorrichtung (1300) eine Verarbeitungseinheit (1302) und eine Kommunikationseinheit (1303) umfasst, wobei die Verarbeitungseinheit (1302) dazu konfiguriert ist, Informationen zur kooperativen Steuerung zu generieren, wobei die Informationen zur kooperativen Steuerung angeben, dass ein Kooperationsmodus für Benutzergeräte der autonome Modus für Benutzergeräte ist, wobei die Informationen zur kooperativen Steuerung verwendet werden, um ein erstes Benutzergerät (TUE1) anzuweisen, eine Sidelink-Übertragung in einer ersten Übertragungseinheit eines ersten Subframes durchzuführen und eine Uplink-Übertragung in einer zweiten Übertragungseinheit des ersten Subframes durchzuführen, wobei die erste Übertragungseinheit benachbart zu der zweiten Übertragungseinheit ist und die Sidelink-Übertragung umfasst, dass das erste Benutzergerät (TUE1) Feedbackinformationen an ein zweites Benutzergerät (CUE1, CUE2) sendet; und
die Kommunikationseinheit dazu konfiguriert ist, die Informationen zur kooperativen Steuerung an das erste Benutzergerät (TUE1) und das zweite Benutzergerät (CUE1, CUE2) in einem zweiten Subframe zu senden;
wobei die Informationen zur kooperativen Steuerung ferner verwendet werden, um das zweite Benutzergerät (CUE1, CUE2) anzuweisen, in einer dritten Übertragungseinheit des ersten Subframes Steuerinformationen, die den Sidelink-Daten entsprechen, an das erste Benutzergerät (TUE1) zu senden und die Sidelink-Daten in einer vierten Übertragungseinheit des ersten Subframes an das erste Benutzergerät (TUE1) zu senden, wobei die dritte Übertragungseinheit benachbart zu der vierten Übertragungseinheit ist, die dritte Übertragungseinheit vor der vierten Übertragungseinheit liegt und die vierte Übertragungseinheit vor der ersten Übertragungseinheit liegt; wobei das zweite Benutzergerät (CUE1, CUE2) in dem autonomen Modus für Benutzergeräte autonom eine physische Übertragungsressource zur Verwendung während der Übertragung der Sidelink-Daten und der Steuerinformationen der Sidelink-Daten auswählt;
wobei der zweite Subframe ein Subframetyp ist, der sich von dem ersten Subframe unterscheidet und eine andere Subframestruktur aufweist.

6. Zugangsnetzwerkvorrichtung nach Anspruch 5, wobei die zweite Übertragungseinheit eine letzte Übertragungseinheit des ersten Subframes ist.

7. Benutzergerät (TUE1), wobei das Benutzergerät ein erstes Benutzergerät (TUE1) ist und das erste Benutzergerät (TUE1) eine Kommunikationseinheit umfasst, wobei
die Kommunikationseinheit dazu konfiguriert ist, Informationen zur kooperativen Steuerung zu empfangen, die durch eine Zugangsnetzwerkvorrichtung (1300) in einem zweiten Subframe gesendet werden, wobei die Informationen zur kooperativen Steuerung angeben, dass ein Kooperationsmodus für Benutzergeräte der autonome Modus für Benutzergeräte ist; und
die Kommunikationseinheit (1300) ferner dazu konfiguriert ist, basierend auf den Informationen zur kooperativen Steuerung eine Sidelink-Übertragung in einer ersten Übertragungseinheit eines ersten Subframes und eine Uplink-Übertragung in einer zweiten Übertragungseinheit des ersten Subframes durchzuführen, wobei die erste Übertragungseinheit benachbart zu der zweiten Übertragungseinheit ist und die Sidelink-Übertragung umfasst, dass das erste Benutzergerät Feedbackinformationen an ein zweites Benutzergerät (CUE1, CUE2) sendet;
wobei das erste Benutzergerät (TUE1) ferner dazu konfiguriert ist, Steuerinformationen, die den Sidelink-Daten entsprechen, in einer dritten Übertragungseinheit des ersten Subframes basierend auf den Informationen zur kooperativen Steuerung zu empfangen und die Sidelink-Daten in einer vierten Übertragungseinheit des ersten Subframes basierend auf den Steuerinformationen zu empfangen, wobei die dritte Übertragungseinheit benachbart zu der vierten Übertragungseinheit ist, die dritte Übertragungseinheit vor der vierten Übertragungseinheit liegt und die vierte Übertragungseinheit vor der ersten Übertragungseinheit liegt; wobei das zweite Benutzergerät (CUE1, CUE2) in dem autonomen Modus für Benutzergeräte autonom eine physische Übertragungsressource zur Verwendung während der Übertragung der Sidelink-Daten und der Steuerinformationen der Sidelink-Daten auswählt;
wobei der zweite Subframe ein Subframetyp ist, der sich von dem ersten Subframe unterscheidet und eine andere Subframestruktur aufweist.

## Revendications

1. Procédé de mise en œuvre de coopération d'équipements utilisateur en mode autonome d'équipement utilisateur, comprenant :
la génération (S201), par un dispositif de réseau d'accès (1300), d'informations de commande coopérative, lesdites informations de commande coopérative indiquant qu'un mode de coopération d'équipements utilisateur est le mode autonome d'équipement utilisateur, dans lequel les informations de commande coopérative sont utilisées pour ordonner au premier équipement utilisateur (TUE1) de réaliser (S204) une transmission de liaison latérale dans une première unité de transmission d'une première sous-trame et réaliser (S204) une transmission de liaison montante dans une deuxième unité de transmission de la première sous-trame, la première unité de transmission est adjacente à la deuxième unité de transmission, et la transmission de liaison latérale comprend l'envoi par le premier équipement utilisateur d'informations de rétroaction à un second équipement utilisateur (CUE1, CUE2) ; et
l'envoi (S202), par le dispositif de réseau d'accès (1300), des informations de commande coopérative au premier équipement utilisateur et au second équipement utilisateur (CUE1, CUE2) dans une seconde sous-trame ;
dans lequel les informations de commande coopérative sont également utilisées pour ordonner au second équipement utilisateur (CUE1, CUE2) d'envoyer (S203), au premier équipement utilisateur (TUE1) dans une troisième unité de transmission de la première sous-trame, des informations de commande correspondant aux données de liaison latérale, et d'envoyer les données de liaison latérale au premier équipement utilisateur dans une quatrième unité de transmission de la première sous-trame, la troisième unité de transmission est adjacente à la quatrième unité de transmission, la troisième unité de transmission est antérieure à la quatrième unité de transmission, et la quatrième unité de transmission est antérieure à la première unité de transmission, dans lequel, dans le mode autonome d'équipement utilisateur, le second équipement utilisateur (CUE1, CUE2) sélectionne de manière autonome une ressource de transmission physique à utiliser pendant la transmission des données de liaison latérale et les informations de commande des données de liaison latérale ;
dans lequel la seconde sous-trame est un type de sous-trame différent de la première sous-trame avec une structure de sous-trame différente.

2. Procédé selon la revendication 1, dans lequel la deuxième unité de transmission est une dernière unité de transmission de la première sous-trame.

3. Procédé de mise en œuvre de coopération d'équipements utilisateur en mode autonome d'équipement utilisateur, comprenant :
la réception, par le premier équipement utilisateur (TUE1), d'informations de commande coopérative envoyées par un dispositif de réseau d'accès dans une seconde sous-trame, lesdites informations de commande coopérative indiquant qu'un mode de coopération d'équipements utilisateur est le mode autonome d'équipement utilisateur ; et
la réalisation, par le premier équipement utilisateur sur la base des informations de commande coopérative, d'une transmission de liaison latérale dans une première unité de transmission d'une première sous-trame et une transmission de liaison montante dans une deuxième unité de transmission de la première sous-trame, dans lequel la première unité de transmission est adjacente à la deuxième unité de transmission, et la transmission de liaison latérale comprend l'envoi par le premier équipement utilisateur d'informations de rétroaction à un second équipement utilisateur (CUE1, CUE2) ;
la réception, par le premier équipement utilisateur (TUE1) dans une troisième unité de transmission de la première sous-trame sur la base des informations de commande coopérative, des informations de commande correspondant aux données de liaison latérale, et la réception des données de liaison latérale dans une quatrième unité de transmission de la première sous-trame sur la base des informations de commande, dans lequel la troisième unité de transmission est adjacente à la quatrième unité de transmission, la troisième unité de transmission est antérieure à la quatrième unité de transmission, et la quatrième unité de transmission est antérieure à la première unité de transmission ; dans lequel, dans le mode autonome d'équipement utilisateur, le second équipement utilisateur (CUE1, CUE2) sélectionne de manière autonome une ressource de transmission physique à utiliser pendant la transmission des données de liaison latérale et les informations de commande des données de liaison latérale ;
dans lequel la seconde sous-trame est un type de sous-trame différent de la première sous-trame avec une structure de sous-trame différente.

4. Procédé selon la revendication 3, dans lequel la deuxième unité de transmission est une dernière unité de transmission de la première sous-trame.

5. Dispositif de réseau d'accès (1300), dans lequel le dispositif de réseau d'accès (1300) comprend une unité de traitement (1302) et une unité de communication (1303), dans lequel
l'unité de traitement (1302) est configurée pour générer des informations de commande coopérative, lesdites informations de commande coopérative indiquant qu'un mode de coopération d'équipements utilisateur est le mode autonome d'équipement utilisateur, dans lequel les informations de commande coopérative sont utilisées pour ordonner au premier équipement utilisateur (TUE1) de réaliser une transmission de liaison latérale dans une première unité de transmission d'une première sous-trame et réaliser une transmission de liaison montante dans une deuxième unité de transmission de la première sous-trame, la première unité de transmission est adjacente à la deuxième unité de transmission, et la transmission de liaison latérale comprend l'envoi par le premier équipement utilisateur (TUE1) d'informations de rétroaction à un second équipement utilisateur (CUE1, CUE2) ; et
l'unité de communication est configurée pour envoyer les informations de commande coopérative au premier équipement utilisateur (TUE1) et au second équipement utilisateur (CUE1, CUE2) dans une seconde sous-trame ;
dans lequel les informations de commande coopérative sont également utilisées pour ordonner au second équipement utilisateur (CUE1, CUE2) d'envoyer, au premier équipement utilisateur (TUE1) dans une troisième unité de transmission de la première sous-trame, des informations de commande correspondant aux données de liaison latérale, et d'envoyer les données de liaison latérale au premier équipement utilisateur (TUE1) dans une quatrième unité de transmission de la première sous-trame, la troisième unité de transmission est adjacente à la quatrième unité de transmission, la troisième unité de transmission est antérieure à la quatrième unité de transmission, et la quatrième unité de transmission est antérieure à la première unité de transmission ; dans lequel, dans le mode autonome d'équipement utilisateur, le second équipement utilisateur (CUE1, CUE2) sélectionne de manière autonome une ressource de transmission physique à utiliser pendant la transmission des données de liaison latérale et les informations de commande des données de liaison latérale ;
dans lequel la seconde sous-trame est un type de sous-trame différent de la première sous-trame avec une structure de sous-trame différente.

6. Dispositif de réseau d'accès selon la revendication **5,** dans lequel la deuxième unité de transmission est une dernière unité de transmission de la première sous-trame.

7. Équipement utilisateur (TUE1), dans lequel l'équipement utilisateur est un premier équipement utilisateur (TUE1), et le premier équipement utilisateur (TUE1) comprend une unité de communication, dans lequel
l'unité de communication est configurée pour recevoir des informations de commande coopérative envoyées par un dispositif de réseau d'accès (1300) dans une seconde sous-trame, lesdites informations de commande coopérative indiquant qu'un mode de coopération d'équipement utilisateur est le mode autonome d'équipement utilisateur ; et
l'unité de communication (1300), est également configurée pour réaliser, sur la base des informations de commande coopérative, une transmission de liaison latérale dans une première unité de transmission d'une première sous-trame et une transmission de liaison montante dans une deuxième unité de transmission de la première sous-trame, dans lequel la première unité de transmission est adjacente à la deuxième unité de transmission, et la transmission de liaison latérale comprend l'envoi par le premier équipement utilisateur d'informations de rétroaction à un second équipement utilisateur (CUE1, CUE2) ;
dans lequel le premier équipement utilisateur (TUE1) est également configuré pour recevoir dans une troisième unité de transmission de la première sous-trame sur la base des informations de commande coopérative, des informations de commande correspondant aux données de liaison latérale, et pour recevoir les données de liaison latérale dans une quatrième unité de transmission de la première sous-trame sur la base des informations de commande, dans lequel la troisième unité de transmission est adjacente à la quatrième unité de transmission, la troisième unité de transmission est antérieure à la quatrième unité de transmission, et la quatrième unité de transmission est antérieure à la première unité de transmission ; dans lequel, dans le mode autonome d'équipement utilisateur, le second équipement utilisateur (CUE1, CUE2) sélectionne de manière autonome une ressource de transmission physique à utiliser pendant la transmission des données de liaison latérale et les informations de commande des données de liaison latérale ; dans lequel la seconde sous-trame est un type de sous-trame différent de la première sous-trame avec une structure de sous-trame différente.
